# EUROPÄISCHE PATENTSCHRIFT

(11) **EP 1 107 917 B1**
(45) Veröffentlichungstag und Bekanntmachung des Hinweises auf die Patenterteilung: **16.10.2002**
(21) Anmeldenummer: 99941610.0
(22) Anmeldetag: 13.08.1999
(51) Int. Cl.: B65D 41/04

(54) **VERFAHREN ZUM HERSTELLEN EINER VERSCHLUSSKAPPE UND VERSCHLUSSKAPPE**
METHOD FOR PRODUCING A CLOSING CAP AND CLOSING CAP PRODUCED ACCORDING TO SAID METHOD
PROCEDE POUR PRODUIRE UN CAPUCHON DE FERMETURE, ET CAPUCHON DE FERMETURE AINSI PRODUIT

(30) Priorität: 03.09.1998 EP 98810880
(43) Veröffentlichungstag der Anmeldung: 20.06.2001
(73) Patentinhaber: Crown Cork & Seal Technologies Corporation, Alsip, IL 60803 (US)
(72) Erfinder: PITMAN, Kelvin, Graham, CH-4416 Bubendorf (CH); JAUSLIN, Richard, CH-4144 Arlesheim (CH)
(74) Vertreter: Hepp, Dieter
(86) Internationale Anmeldenummer: EP9905941
(87) Internationale Veröffentlichungsnummer: WO00013983

(56) Entgegenhaltungen:
- EP-A- 0 215 202
- FR-A- 1 028 315
- US-A- 3 458 077
- US-A- 3 963 845

## Beschreibung

Die Erfindung betrifft ein Verfahren zum Herstellen einer Verschlusskappe aus Kunststoffmaterial und eine solche Verschlusskappe gemäss dem Oberbegriff der unabhängigen Patentansprüche (siehe zum Beispiel das Dokument US-A-3458077).

Verschlusskappen aus Kunststoffmaterial werden heute in einer Vielzahl von Formen zum Verschliessen von Behältern wie beispielsweise Getränkeflaschen eingesetzt. Kunststoffmaterial eignet sich gut, weil solche Verschlüsse durch Spritzgiessen oder Pressformen einfach herstellbar sind. Die Eigenschaften des elastischen Kunststoffmaterials erlauben zudem ein gutes Abdichten des zu verschliessenden Behälters sowie eine gute Anpassung der Verschlusskappe an die Behältermündung.

Andererseits ist das Kunststoffmaterial aber auch mit bestimmten Nachteilen behaftet. So wäre es beispielsweise im Bereich des Bodens der Verschlusskappe vorteilhaft, ein weniger elastisches Material einzusetzen, um die Anpressung der Dichtelemente an die Behältermündung zu erhöhen. Ausserdem ist das üblicherweise als Kunststoffmaterial verwendete Polyäthylen nicht optimal bedruckbar.

Es wurde deshalb in der Vergangenheit angestrebt, Verschlusskappen aus zwei Komponenten herzustellen, die aus unterschiedlichen Materialien bestehen. Bei solchen Verschlüssen besteht aber das Problem, dass die beiden Teile zusammengesetzt werden müssen, was die Herstellungskosten erhöht.

Zum Herstellen von solchen Kunststoffverschlüssen sind Spritzgiessverfahren und Pressformverfahren bekannt. Im Spritzgiessverfahren wird die verflüssigte Kunststoffmasse in eine Spritzgussform eingespritzt. Beim Pressformen wird eine Portion eines erhitzten Kunststoffmaterials in eine Matrize gelegt und durch einen Stempel in den Zwischenraum zwischen der Matrize und dem Stempel verdrängt.

Es ist eine Aufgabe der vorliegenden Erfindung, die Nachteile des Bekannten zu vermeiden, insbesondere also ein Verfahren zum Herstellen einer Verschlusskappe aus zwei Komponenten zu schaffen, welches einfach und wirtschaftlich durchführbar ist und welches zu optimal dichtenden Verschlusskappen führt.
Eine weitere Aufgabe der Erfindung besteht darin, eine Verschlusskappe zu schaffen, welche aus zwei Komponenten aufgebaut ist, die einfach und wirtschaftlich herstellbar ist und welche gute Dichteigenschaften aufweist.

Erfindungsgemäss werden diese Aufgaben mit einem Verfahren und einer Verschlusskappe gemäss den Merkmalen des kennzeichnenden Teils der unabhängigen Patentansprüche gelöst.

Die Verschlusskappe wird im Pressformverfahren (auch als Compression moulding bekannt) hergestellt. In einem ersten Schritt wird eine Scheibe zum Bilden des Kappenbodens bereitgestellt. Die Scheibe besteht aus einem ersten Material.
Dieses Material weist vorzugsweise eine geringere Verformbarkeit auf als das für den Rest der Verschlusskappe verwendete Material, insbesondere als Polyäthylen. Unter Verformbarkeit wird hier sowohl eine elastische Verformung als auch eine dauerhafte Verformung (beispielsweise durch Kaltfluss) verstanden.

Zum Pressformen der Verschlusskappe wird eine Matrize bereitgestellt, deren Innenkontur der Aussenkontur des herzustellenden Verschlusses entspricht.

In einem weiteren Verfahrensschritt wird die Scheibe zum Bilden des Kappenbodens in die Matrize eingelegt. Vorher oder nachher wird eine Portion eines erwärmten plastifizierten Kunststoffmaterials in die Matrize oder auf die Scheibe gegeben.

Durch gegenseitiges axiales Verschieben der Matrize und eines Stempels wird das Kunststoffmaterial in einen Hohlraum verdrängt, der zwischen der Matrize und dem Stempel gebildet wird. Die einzelnen Schritte zum Herstellen von Verschlusskappen im Pressformverfahren sind an sich dem Fachmann bekannt und müssen nicht im Detail ausgeführt werden. Wesentlich für die Erfindung ist es, dass eine Scheibe in die Matrize eingelegt wird, bevor das Kunststoffmaterial in den Hohlraum zwischen der Matrize und dem Stempel verdrängt wird.

In einem ersten Ausführungsbeispiel wird zuerst die Scheibe auf den Boden der Matrize gelegt und erst anschliessend wird die Portion aus Kunststoffmaterial auf die Scheibe abgegeben.

Alternativ ist es aber auch denkbar, zuerst eine Portion aus Kunststoffmaterial in die Matrize zu geben und erst anschliessend die Scheibe einzulegen. In diesem Zusammenhang ist es besonders vorteilhaft, wenn die Scheibe gleichzeitig mit dem Stempel in die Matrize eingeführt wird und dabei durch den Stempel gehalten wird. Die Scheibe dient also gleichzeitig zum Verpressen der Portion des Kunststoffmaterials im Bereich des Kappenbodens. Die Scheibe kann beispielsweise durch einen Unterdruck am Stempel gehalten werden oder (im Fall von metallischen Scheiben) auch durch ein Magnetfeld.

Die Scheibe besteht vorteilhaft aus Metall, beispielsweise aus Aluminium oder Stahlblech. Es ist aber auch denkbar, Scheiben aus Kunststoffmaterial wie PET oder PEN oder aus Copolymeren von PET und PEN zu verwenden. Weiter denkbar sind Laminate, beispielsweise aus verschiedenen Kunststoffen z.B. mit Barriere-Eigenschaften, und aus Metallen.

Die erfindungsgemässe Verschlusskappe aus einem Kunststoffmaterial besteht im wesentlichen aus einem Kappenboden und aus einer vom Rand des Kappenbodens entspringenden, etwa zylindrischen Kappenwand. Die Kappenwand ist mit Rückhaltemitteln zum Befestigen der Verschlusskappe an einer Behältermündung versehen.

Der Kappenboden ist erfindungsgemäss im wesentlichen aus einer Scheibe eines ersten Materials geformt. Auf einer der Oberflächen der Scheibe ist eine einstückig mit der Verschlusskappe ausgebildete Schicht, insbesondere ein dünner Film aus dem Kunststoffmaterial der Verschlusskappe vorgesehen. Die Schicht kann sowohl auf der Unterseite der Scheibe als auch auf der Oberseite der Scheibe angeordnet sein. Die Scheibe besteht vorzugsweise aus Metall, beispielsweise aus Aluminium wie bereits oben ausgeführt. Durch die Schicht ist die Lage der Scheibe auch in axialer Richtung genau bestimmt und die Verbindung zwischen der Scheibe und dem Rest der Verschlusskappe ist besonders gut.

In einem bevorzugten Ausführungsbeispiel ist die Scheibe wenigstens entlang ihres Umfangs mit Mitteln zur Verbindung mit dem Rest der Verschlusskappe versehen. Diese Mittel können aus Vorsprüngen oder aus Vertiefungen bestehen, die sich über die Aussenfläche der Scheibe verteilen. Vertiefungen oder Vorsprünge können aber auch auf der Unterseite oder auf der Oberseite der Scheibe angeordnet sein.

Vorteilhaft ist die Scheibe bereits vor dem Einsetzen bedruckt oder mit einem Muster versehen.

Die Verschlusskappe kann ausserdem mit gängigen bekannten Elementen von Verschlusskappen, wie beispielsweise einem Garantieband, Entlüftungsaussparungen oder einer Dichtanordnung versehen sein. Die Dichtanordnung kann aus einer eingesetzten Dichteinlage (sogenanntes Liner) aber auch aus einstückig mit dem aus Kunststoffmaterial bestehenden Teil der Verschlusskappe ausgebildeten Dichtlippen bestehen. Vor allem eignet sich auch die dünne Schicht bzw. der Film zum Anbringen von Dichtlippen oder anderen Konfigurationen.

Die Dimension der Scheibe kann frei gewählt werden. Im allgemeinen entspricht der Durchmesser der Dichtscheibe etwa dem Durchmesser der Mündung des zu verschliessenden Behälters. Unter gewissen Umständen kann der Durchmesser aber auch bewusst kleiner oder grösser als der Aussendurchmesser des zu verschliessenden Behälters gewählt werden. Wenn die Dichtanordnung aus Dichtlippen gebildet ist, kann der Durchmesser der Scheibe vorteilhaft auch kleiner sein als der freie Innendurchmesser des zu verschliessenden Behälters. Damit wird gewährleistet, dass die Dichtlippen fest mit dem Rest der Verschlusskappe verbunden sind. Im Falle einer eingelegten, sich bis in den Bereich der Kappenschürze erstreckenden Einlage kann sich die Scheibe radial bis über die Dichteinlage hinaus erstrecken. Die Scheibe kann in einem solchen Fall an ihrem Umfang auch umgestanzt sein, so dass sich eine bessere Anpressung der eingelegten Dichteinlage an die Behältermündung ergibt.

Ausser kreisförmigen Scheiben sind auch andere Geometrien, beispielsweise Polygone oder auch sternförmige Anordnungen denkbar. Der Kappenboden kan auch mit an sich bekannten radialen Verstärkungsrippen versehen sein, welche als Elemente der Scheibe oder aus Kunststoffmaterial gebildet sein können.

Die Erfindung wird im folgenden in Ausführungsbeispielen und anhand der Zeichnungen näher erläutert. Es zeigen:
- Figur 1: Querschnitt durch eine erfindungsgemässe Verschlusskappe,
- Figur 2: schematische Darstellung einer Verschlusskappe in der Draufsicht,
- Figuren 3 bis 5: einzelne Verfahrensschritte des erfindungsgemässen Verfahrens,
- Figur 6: schematische Darstellung eines alternativen Ausführungsbeispiels des erfindungsgemässen Verfahrens,
- Figuren 7a bis 7d: Ausschnitte verschiedener Ausführungsbeispiele der erfindungsgemässen Verschlusskappe und
- Figur 8: vergrösserte Darstellung eines Ausschnitts der erfindungsgemässen Verschlusskappe im Querschnitt.

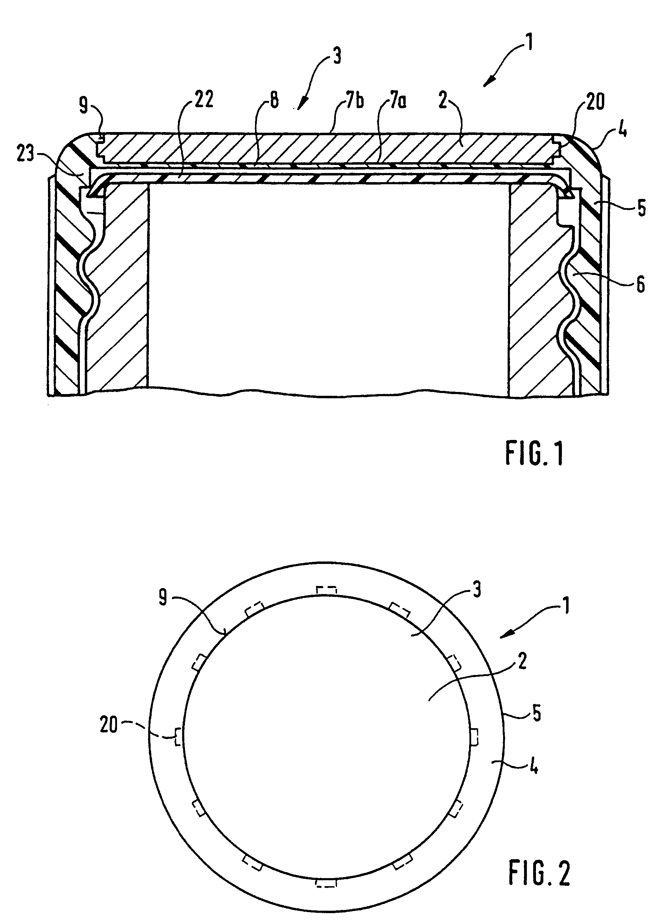

Figur 1 zeigt eine Verschlusskappe 1 im Querschnitt. Die Verschlusskappe 1 weist einen Kappenboden 3 und eine vom Rand 4 des Kappenbodens 3 entspringende Kappenwand 5 auf. Die Kappenwand 5 ist mit einem Schraubgewinde 6 zum Befestigen der Verschlusskappe 1 auf einer Behältermündung versehen.

Der Kappenboden 3 wird im wesentlichen durch eine etwa kreisförmige Scheibe 2 gebildet. Die Scheibe 2 ist mit dem Rest der Verschlusskappe 1 entlang ihres Umfangs 9 und entlang ihrer Unterseite 7a verbunden. Im Bereich der Unterseite 7a ist eine dünne Schicht 8 (Dicke ca. 0,01 - 0,1 mm) aus dem Kunststoffmaterial gebildet, aus welchem der Rest der Verschlusskappe 1 besteht. Die Scheibe 2 besteht aus Aluminium und ist ca. 0,1 bis etwa 1 mm dick. Der Rest der Verschlusskappe 1 besteht aus Polyäthylen.

In den Figuren ist die Scheibe 2 aus Gründen der Uebersichtlichkeit übertrieben dick gezeichnet.

Entlang des Umfangs 9 der Scheibe 2 sind Vorsprünge 20 vorgesehen. Die Vorsprünge 20 gewährleisten eine gute und dauerhafte Verbindung zwischen der Scheibe 2 und dem Rest der Verschlusskappe 1.

Auf der Innenseite des Kappenbodens 3 ist eine Dichtscheibe 22 eingelegt, welche durch die Innenseite des Kappenbodens und durch eine umlaufende Rippe 23 im Uebergangsbereich zwischen der Kappenwand und dem Kappenboden 3 gegen die Behältermündung angepresst wird.

Die Verschlusskappe kann also einfach im Kunststoff-Pressformverfahren hergestellt werden und weist im Bereich der Kappenwand 5 die gewünschte Elastizität auf. Trotzdem ist der Kappenboden 3 durch gezielte Wahl des Materials der Scheibe 2 mit einer ausreichenden Festigkeit versehen.

In Figur 2 ist die Verschlusskappe aus Figur 1 schematisch in Draufsicht dargestellt. Die Scheibe 2 ist kreisförmig ausgebildet und entlang ihres Umfangs 9 mit Vorsprüngen 20 versehen. Die Vorsprünge 20 greifen in den aus Polyäthylen gefertigten Rest der Verschlusskappe 1 ein.

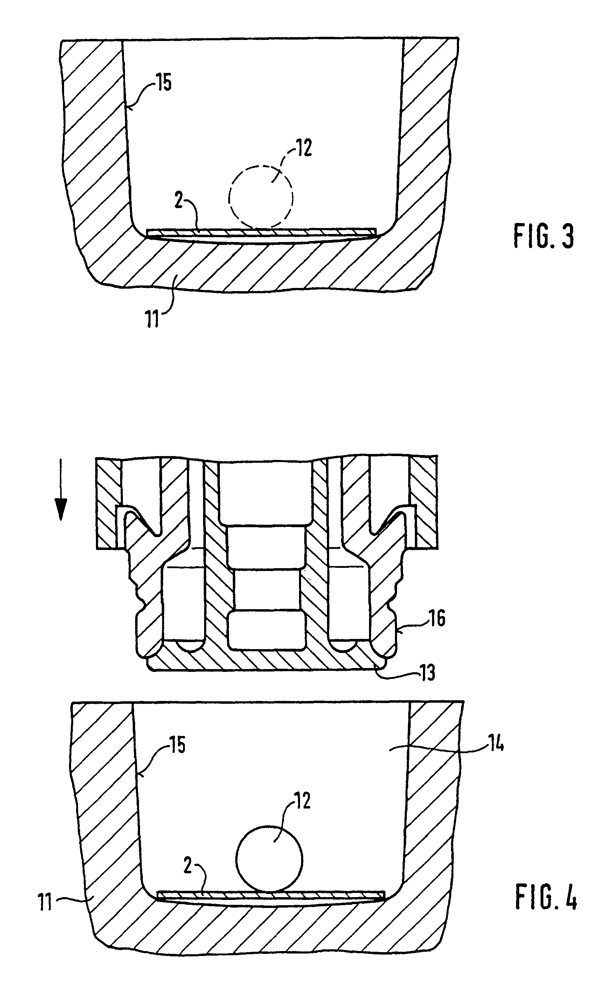

In den Figuren 3 bis 6 sind verschiedene Verfahrensschritte des erfindungsgemässen Herstellungsverfahrens gezeigt.

Zuerst wird eine Matrize 11 bzw. eine Vielzahl solcher Matrizen bereitgestellt. Solche Matrizen werden heute bereits in grosser Zahl eingesetzt. Die Vorrichtung zum Durchführen der vorliegenden Erfindung entspricht im wesentlichen bekannten Vorrichtungen. Die Matrize 11 wird entlang eines geschlossenen Weges geführt, wobei sie verschiedene Arbeitsstationen durchläuft. Die Maschine ist mit entsprechenden Mitteln zum Bewegen der Matrize entlang des Weges versehen.

In einem ersten Verfahrensschritt wird eine Scheibe 2 aus einem verhältnismässig festen Material auf den Boden der Matrize 11 gelegt. Anschliessend wird eine Portion 12 aus einem erwärmten Kunststoffmaterial auf die Scheibe gegeben.

Das Einlegen der Portion 12 kann auf verschiedene bekannte Weisen geschehen. Beispielsweise kann Kunststoffmaterial in einem Schneckengetriebe erwärmt und durch einen Extruder extrudiert werden. Durch Gravitation, Einwirkung eines Gasstroms oder durch Schneidewerkzeuge kann eine Portion 12 vom extrudierten Strang entfernt werden. Die Art und Weise des Ablegens der Portion 12 ist aber nicht Gegenstand der vorliegenden Erfindung.

In einem weiteren Verfahrensschritt (Figur 4) wird ein Stempel 13 axial gegen die Matrize 11 verschoben (siehe Pfeilrichtung). Solche Stempel sind ebenfalls im Stand der Technik bekannt. Der Stempel 13 besteht aus einer Mehrzahl von einzelnen, gegeneinander bewegbaren Teilen, welche das Entformen der hergestellten Verschlusskappe erlauben. Im wesentlichen wird zwischen der Innenwand 15 der Matrize 11 und der Aussenkontur 16 des Stempels 13 ein Hohlraum 14 gebildet. Durch axiales Gegeneinanderverschieben des Stempels 13 und der Matrize 11 wird die Portion 12 aus Kunststoffmaterial in dem Hohlraum 14 verdrängt.

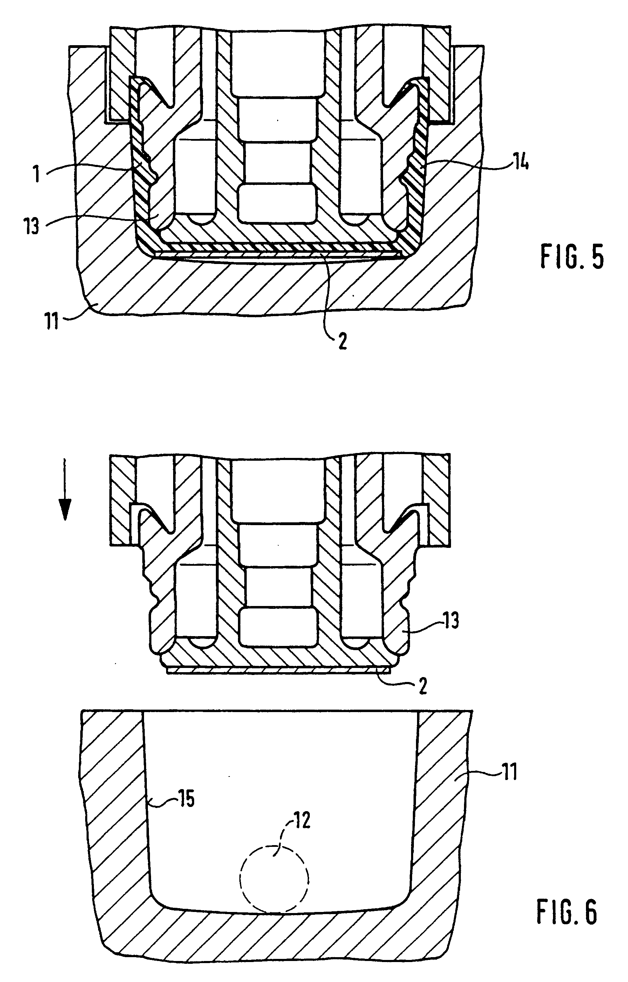

In Figur 5 sind die Matrize 11 und der Stempel 13 in Endlage gezeigt. Der Hohlraum 14 ist durch Kunststoffmaterial ausgefüllt, wodurch eine Verschlusskappe 1 gebildet wird. Die Scheibe 2 bildet den Kappenboden der Verschlusskappe 1 und ist innig mit dem sie umschliessenden Kunststoffmaterial verbunden. Schematisch ist am unteren Ende der Verschlusskappe 1 ein Garantieband mit Rückhalteelementen gezeigt.

In Figur 6 ist ein alternatives Ausführungsbeispiel des erfindungsgemässen Verfahrens gezeigt. Dabei wird zuerst eine Portion 12 aus erwärmtem Kunststoffmaterial in die Matrize 11 gegeben. Die Scheibe 2 wird gleichzeitig mit dem Stempel 13 in die Matrize 11 eingführt. Die Scheibe 2 bildet dabei den vordersten flachen Abschnitt des Stempels 13, der zum Bilden des Kappenbodens dient. Die Scheibe 2 kann beispielsweise durch Aufbringen eines leichten Unterdrucks im Bereich des Stempels 13 an diesem gehalten werden. Es wären aber auch andere mechanische, magnetische oder elektromagnetische Halterungen denkbar.

Bei gemäss Figuren 3 bis 5 hergestellten Verschlusskappen bildet die Scheibe 2 die Oberfläche des Kappenbodens 3, während eine Schicht 8 auf der Unterseite der Scheibe 2 die Innenfläche des Kappenbodens 3 bildet. Bei gemäss Figur 6 hergestellten Verschlusskappen bildet die Schicht 8 die Oberfläche des Kappenbodens 3, während die Innenfläche des Kappenbodens 3 durch die Unterseite der Scheibe 2 gebildet wird.

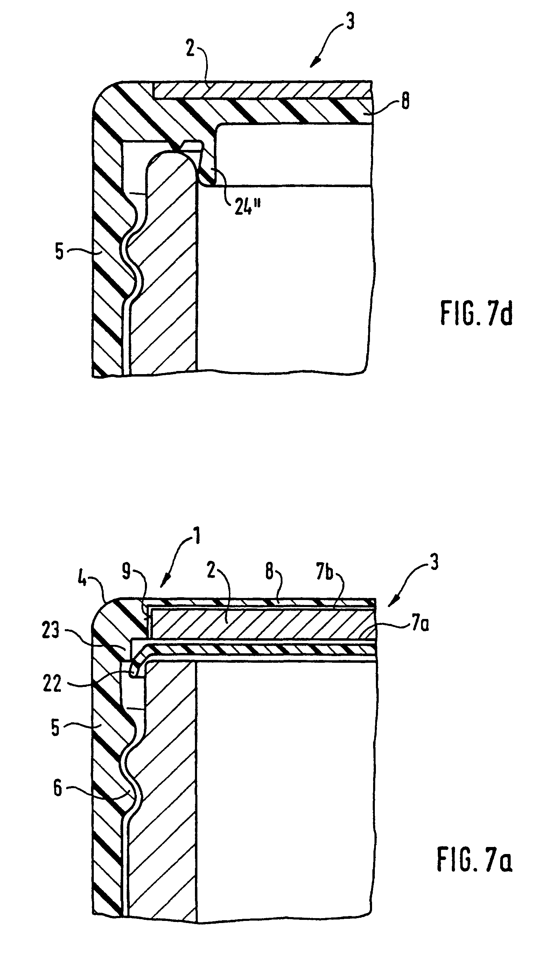

Ein Ausführungsbeispiel einer Verschlusskappe 1, welche mit dem Verfahren aus Figur 6 hergestellt ist, ist in Figur 7a gezeigt. Die Innenseite der Kappenwand 3 wird durch die Scheibe 2 gebildet. Die Unterseite 7a der Scheibe 2 drückt eine Dichtscheibe 22 gegen die Behältermündung. Die Oberseite 7b ist mit der dünnen Schicht 8 verbunden.

Die Dichtscheibe 22 wird ausserdem durch einen umlaufenden Wulst 23 gegen den Rand der Behältermündung gedrückt.

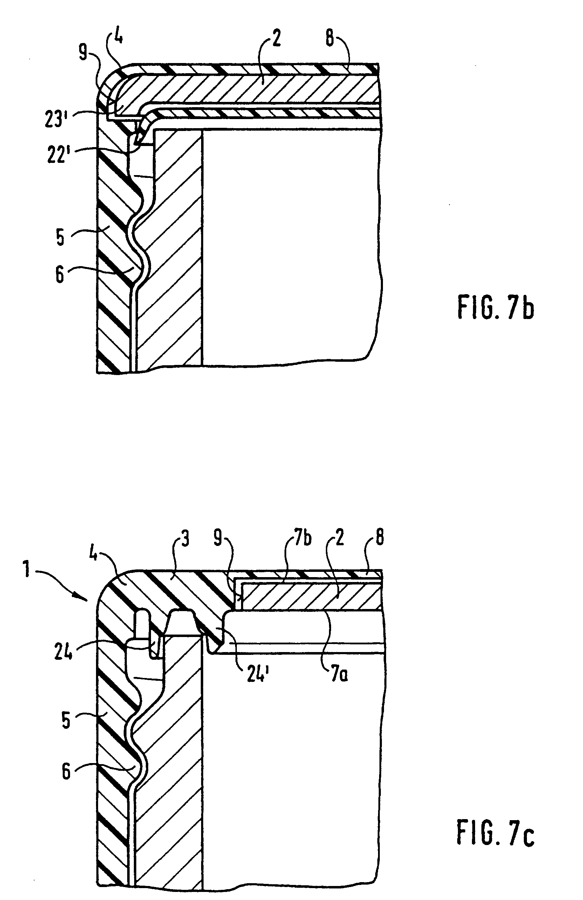

In Figur 7b ist ein alternatives Ausführungsbeispiel gezeigt. Dabei ist die Scheibe 2 mit einem grösseren Durchmesser ausgebildet und entlang ihrem Umfang.9 umgebogen. Durch die Umbiegung wird eine Andrückrippe 23' gebildet, welche die Dichtscheibe 22 gegen die Behältermündung drückt.

In Figur 7c ist ein weiteres Alternativausführungsbeispiel gezeigt. Die Scheibe 2 gemäss Figur 7c ist mit kleinerem Durchmesser ausgebildet als die freie Innenfläche des zu verschliessenden Behälters. Im Bereich der Behältermündung sind Dichtlippen 24, 24' angeordnet, welche die Behältermündung abdichten. Die Dichtlippen 24, 24' sind nur schematisch dargestellt. Selbstverständlich können allgemein bekannte Olivendichtungen, Trompetendichtungen oder nur innere oder äussere, umfaltbare Dichtlippen eingesetzt werden. Solche Lippen sind dem Fachmann in einer Vielzahl von verschiedenen Anordnungen bekannt.

Figur 7d zeigt ein Ausführungsbeispiel, in welchem die Scheibe 2 dünner ausgebildet ist als die Schicht 8 aus Kunststoffmaterial. In der Schicht 8 sind Dichtanordnungen 24" zum Abdichten einer Behältermündung angebracht.

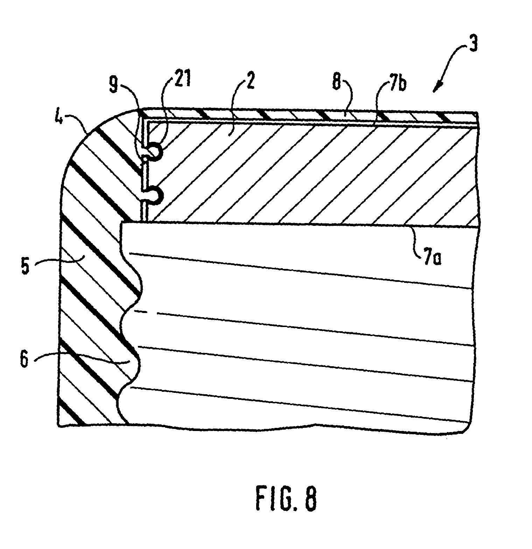

In Figur 8 ist der Rand 4 des Kappenbodens 3 einer Verschlusskappe 1 vergrössert dargestellt. Die Scheibe 2 ist mit Vertiefungen 21 versehen, in welche das Kunststoffmaterial der Verschlusskappe 1 eindringen kann. Auf diese Weise ergibt sich eine besonders gute Verbindung zwischen der Scheibe 2 und dem Material der Verschlusskappe 1. Die Schicht 8 der Verschlusskappe bildet die Oberseite des Kappenbodens 3. Selbstverständlich kann der Film 8 auch auf der Unterseite 7a der Scheibe 2 angeordnet sein.

## Patentansprüche

1. Verfahren zum Herstellen einer Verschlusskappe (1) aus Kunststoffmaterial durch Pressformen, **gekennzeichnet durch** die Schritte
(a) Bereitstellen einer Scheibe (2) zum Bilden eines Kappenbodens (3) aus einem ersten Material,
(b) Bereitstellen einer Matrize (11) zum Pressformen der Verschlusskappe (1)
(c) Einlegen der Scheibe (2) in die Matrize (11)
(d) vor oder nach Schritt (c): Einlegen einer Portion (12) eines erwärmten, plastifizierten Kunststoffmaterials in die Matrize (11)
(e) gegenseitiges axiales Verschieben der Matrize (11) und eines Stempels (13) zum Verdrängen des Kunststoffmaterials in einen zwischen der Innenwand (15) der Matrize (11) und der Aussenkontur (16) des Stempels (13) gebildeten Hohlraum (14).

2. Verfahren nach Anspruch 1, **dadurch gekennzeichnet, dass** zuerst die Scheibe (2) in die Matrize (11) gelegt wird und anschliessend die Portion (12) aus Kunststoffmaterial auf die Scheibe (2) aufgebracht wird.

3. Verfahren nach Anspruch 1, **dadurch gekennzeichnet, dass** zuerst die Portion (12) aus Kunststoffmaterial in die Matrize (11) eingebracht wird und anschliessend die Scheibe (2) eingelegt wird.

4. Verfahren nach Anspruch 3, **dadurch gekennzeichnet, dass** die Scheibe durch den Stempel (13) gehalten wird und gleichzeitig mit dem axialen Verschieben von Matrize (11) und Stempel (13) in die Matrize (11) eingelegt wird.

5. Verfahren nach einem der Ansprüche 1 bis 4, **dadurch gekennzeichnet, dass** eine Scheibe bereitgestellt wird, die aus einem Material besteht, welches im Vergleich zum Material der Portion (12) eine geringere Verformbarkeit aufweist, insbesondere aus PET, PEN oder aus Metall.

6. Verschlusskappe (1) aus einem Kunststoffmaterial, mit einem Kappenboden (3) und einer vom äusseren Rand (4) des Kappenbodens (3) entspringenden, etwa zylindrischen Kappenwand (5) mit Rückhalteelementen (6) zum Befestigen der Verschlusskappe (1) an einer Behältermündung,
**dadurch gekennzeichnet, dass** der Kappenboden (3) im wesentlichen aus einer Scheibe (2) aus einem vom Kunststoffmaterial verschiedenen Material besteht, und dass auf einer der Oberflächen (7a, 7b) der Scheibe (2) ein einstückig mit der Verschlusskappe (1) ausgebildete Schicht, insbesondere ein Film (8) aus dem Kunststoffmaterial der Verschlusskappe (1) vorgesehen ist.

7. Verschlusskappe nach Anspruch 6, **dadurch gekennzeichnet, dass** der Film (8) auf der Unterseite (7a) der Scheibe (2) gebildet ist, so dass die Oberseite (7b) der Scheibe (2) die Oberfläche des Kappenbodens (3) bildet.

8. Verschlusskappe nach Anspruch 6, **dadurch gekennzeichnet, dass** der Film (8) auf der Oberseite (7b) der Scheibe (2) gebildet ist, so dass der Film (8) die Oberfläche des Kappenbodens (3) bildet.

9. Verschlusskappe nach einem der Ansprüche 6 bis 8, **dadurch gekennzeichnet, dass** die Scheibe aus Metall, PET oder PEN oder Copolymeren aus PET und PEN oder aus einem Laminat besteht.

10. Verschlusskappe nach einem der Ansprüche 6 bis 9, **dadurch gekennzeichnet, dass** die Scheibe (2) wenigstens entlang ihres Umfangs (9) Mittel (20; 21) zur Verbindung mit dem Rest der Verschlusskappe (1), insbesondere Vorsprünge (20) oder Vertiefungen (21) aufweist.

11. Verschlusskappe nach einem der Ansprüche 6 bis 10, **dadurch gekennzeichnet, dass** die Scheibe (2) bedruckt ist.

12. Verschlusskappe nach einem der Ansprüche 6 bis 11, **dadurch gekennzeichnet, dass** die Dichtscheibe (22) einen umgebogen Rand im Bereich ihres Umfangs (9) aufweist.

13. Verschlusskappe nach einem der Ansprüche 6 bis 12, **dadurch gekennzeichnet, dass** die Verschlusskappe mit Dichtmitteln (22; 24, 24') versehen ist.

## Claims

1. A process for producing a closure cap (1) of plastics material by squeeze moulding, **characterised by** the following steps:
(a) providing a disc (2) for forming a cap end portion (3) of a first material,
(b) providing a female mould (11) for compression moulding of the closure cap (1),
(c) placing the disc (2) in the female mould (11),
(d) before or after step (c): placing a portion (12) of a heated plasticised plastics material In the female mould (11), and
(e) mutual axial displacement of the female mould (11) and a ram (13) for displacement of the plastics material Into a hollow space (14) formed between the inside wall (15) of the female mould (11) and the outside contour (16) of the ram (13).

2. A process according to claim 1 **characterised in that** firstly the disc (2) is put into the female mould (11) and then the portion (12) of plastics material is put on to the disc (2).

3. A process according to claim 1 **characterised In that** firstly the portion (12) of plastics material is introduced Into the female mould (11) and then the disc (2) is placed therein.

4. A process according to claim 3 **characterised in that** the disc is held by the ram (13) and put into the female mould (11) simultaneously with the axial displacement of the female mould (11) and the ram (13).

5. A process according to one of claims 1 to 4 **characterised in that** a disc is prepared, comprising a material which in comparison with the material of the portion (12) is of lower deformability, in particular PET, PEN or metal.

6. A closure cap (1) comprising a plastics material, having a cap end portion (3) and a substantially cylindrical cap wall (5) which issues from the outer edge (4) of the cap end portion (3), with retaining elements (6) for fixing the closure cap (1) to the mouth opening of a container, **characterised in that** the cap end portion (3) comprises substantially a disc (2) of a material different from the plastics material, and that provided on one of the surfaces (7a, 7b) of the disc (2) is a layer which is formed in one piece with the closure cap (1), in particular a film (8) comprising the plastics material of the closure cap (1).

7. A closure cap according to claim 6 **characterised in that** the film (8) is formed on the underside (7a) of the disc (2) so that the top side (7b) of the disc (2) forms the surface of the cap end portion (3).

8. A closure cap according to claim 6 **characterised in that** the film (8) is formed on the top side (7b) of the disc (2) so that the film (8) forms the surface of the cap end portion (3).

9. A closure cap according to one of claims 6 to 8 **characterised in that** the disc comprises metal, PET or PEN or copolymers of PET and PEN or a laminate.

10. A closure cap according to one of claims 6 to 9 **characterised in that** at least along its periphery (9) the disc (2) has means (20; 21) for connection to the remainder of the closure cap (1), in particular projections (20) or recesses (21).

11. A closure cap according to one of claims 6 to 10 **characterised in that** the disc (2) is printed upon.

12. A closure cap according to one of claims 6 to 11 **characterised in that** the sealing disc (22) has a bent-over edge in the region of its periphery (9).

13. A closure cap according to one of claims 6 to 12 **characterised in that** the closure cap is provided with sealing means (22; 24, 24').

## Revendications

1. Procédé pour fabriquer un couvercle (1) en matière plastique par moulage par compression, **caractérisé par** les étapes qui consistent à
(a) préparer une plaque (2) pour former un fond de couvercle (3) en une première matière,
(b) préparer une matrice (11) pour mouler par compression le couvercle (1),
(c) placer la plaque (2) dans la matrice (11),
(d) avant ou après l'étape (c) : placer dans la matrice (11) une portion (12) d'une matière plastique chauffée et ramollie,
(e) déplacer axialement la matrice (11) et un poinçon (13) l'un par rapport à l'autre pour refouler la matière plastique dans une cavité (14) définie entre la paroi intérieure (15) de la matrice (11) et le contour extérieur (16) du poinçon (13).

2. Procédé selon la revendication 1, **caractérisé en ce que** la plaque (2) est tout d'abord placée dans la matrice (11) et la portion (12) de matière plastique est ensuite appliquée sur la plaque (2).

3. Procédé selon la revendication 1, **caractérisé en ce que** la portion (12) de matière plastique est tout d'abord introduite dans la matrice (11) et la plaque (2) est ensuite mise en place.

4. Procédé selon la revendication 3, **caractérisé en ce que** la plaque est retenue par le poinçon (13) et est placée dans la matrice (11) en même temps que le déplacement axial de ladite matrice (11) et du poinçon (13).

5. Procédé selon l'une des revendications 1 à 4, **caractérisé en ce qu'**on prépare une plaque composée d'une matière qui présente une plus faible capacité de déformation que la matière de la portion (12), notamment de PET, de PEN ou de métal.

6. Couvercle (1) composé d'une matière plastique, comprenant un fond (3) et une paroi (5) à peu près cylindrique qui part du bord extérieur (4) du fond (3) et qui est pourvue d'éléments de retenue (6) destinés à fixer le couvercle (1) à une ouverture de récipient, **caractérisé en ce que** le fond de couvercle (3) se compose essentiellement d'une plaque (2) en une matière différente de ladite matière plastique, et **en ce qu'**il est prévu sur l'une des faces (7a, 7b) de la plaque (2) une couche venue de matière avec le couvercle (1), notamment un film (8) composé de la matière plastique du couvercle (1).

7. Couvercle selon la revendication 6, **caractérisé en ce que** le film (8) est formé sur le côté inférieur (7a) de la plaque (2), de sorte que le côté supérieur (7b) de la plaque (2) forme la surface du fond de couvercle (3).

8. Couvercle selon la revendication 6, **caractérisé en ce que** le film (8) est formé sur le côté supérieur (7b) de la plaque (2), de sorte que le film (8) forme la surface du fond de couvercle (3).

9. Couvercle selon l'une des revendications 6 à 8, **caractérisé en ce que** la plaque se compose de métal, de PET ou PEN ou de copolymères de PET et PEN ou d'un stratifié.

10. Couvercle selon l'une des revendications 6 à 9, **caractérisé en ce que** la plaque (2) présente au moins le long de sa circonférence (9) des moyens (20 ; 21) pour la relier au reste du couvercle (1), notamment des saillies (20) ou des creux (21).

11. Couvercle selon l'une des revendications 6 à 10, **caractérisé en ce que** la plaque (2) est imprimée.

12. Couvercle selon l'une des revendications 6 à 11, **caractérisé en ce que** la plaque d'étanchéité (22) présente dans la zone de sa circonférence (9) un bord replié.

13. Couvercle selon l'une des revendications 6 à 12, **caractérisé en ce qu'**il est pourvu de moyens d'étanchéité (22 ; 24, 24').
